# EUROPÄISCHE PATENTSCHRIFT

(11) **EP 1 927 786 B1**
(45) Veröffentlichungstag und Bekanntmachung des Hinweises auf die Patenterteilung: **27.10.2010**
(21) Anmeldenummer: 07121378.9
(22) Anmeldetag: 23.11.2007
(51) Int. Cl.: F16H 7/08, F16H 7/12, F16H 7/18

(54) **Plattenventile für Zugmittelspannsysteme**
Plate valve for tensioning systems with a traction mechanism
Valve de commande pour systèmes de tension de moyen de traction

(30) Priorität: 24.11.2006 DE 102006055465; 02.10.2007 DE 102007047170
(43) Veröffentlichungstag der Anmeldung: 04.06.2008
(73) Patentinhaber: Schaeffler KG, 91074 Herzogenaurach (DE)
(72) Erfinder: Kern, Roman, 91301, Forchheim (DE)

(56) Entgegenhaltungen:
- EP-A- 0 560 685
- DE-A1-102004 047 450
- DE-U1- 9 203 759
- US-A- 4 940 447
- US-A- 5 720 684

## Beschreibung

### Gebiet der Erfindung

Die Erfindung betrifft ein Plattenventil für ein hydraulisches Spannsystem, entsprechend dem Oberbegriff des Anspruchs 1 und wie es aus der US 4940447 A bekannt ist.

### Hintergrund der Erfindung

Aus der EP 0 919 744 A1 ist ein Spannsystem bekannt, das als Rückschlagventil einen scheibenförmigen Ventilkörper einschließt. Dabei steht der Ventilkörper mit einem Stößel in Verbindung, der in eine Hülse eines Füllkörpers im Inneren des Spannkolbens angeordnet ist. In der Hülse ist der Stößel unter Zwischenfügung eines eine Radialkraft ausübenden Metallrings geführt, sodass ein Verschieben des Stößels unter Reibung erfolgt. Aufgrund dieser Reibverbindung zwischen dem plattenförmigen Ventilkörper und dem Spannkolben besteht zwischen dem Öffnen und dem Schließen des Ventilkörpers unmittelbar ein Zusammenhang mit der Bewegung des Spannkolbens.

Gemäß der DE 34 43 183 A1 ist in einem für Fahrzeuge bestimmten Stoßdämpfer ein Plattenventil integriert, dass eine als Verbindung bezeichnete Steueröffnung zwischen zwei Arbeitskammern des Stoßdämpfers steuert. Als Plattenventil dient dazu eine federnd angeordnete Ventilplatte, die an einem Ende lagefixiert ist und die sich über die Steuerbohrung erstreckt. Bei einer Stellbewegung des Kolbens, die einen Unterdruck in dem Druckraum des Stoßdämpfers auslöst, der unter anderem das Plattenventil aufnimmt, erfolgt ein selbsttätiges Öffnen des Plattenventils. Nach Ende oder einer Umkehrung dieser Stellbewegung des Kolbens verschließt das als federnde Ventilplatte ausgeführte Plattenventil selbsttätig die Steueröffnung. Aufgrund der einseitigen Befestigung des Plattenventils erfordert dieses beim Öffnen einen relativ gro-ßen Bauraum, da die federnde Ventilplatte im Bereich der Befestigung einen Drehpunkt bildet, um den sich die Ventilplatte in einem relativ großen Radius bewegt.

Den zuvor genannten bekannten Plattenventilen gemeinsam ist ein relativ gro-ßer erforderlicher Bauraum, der unmittelbar Einfluss auf den erforderlichen Einbauraum des Hydraulikventils der Spannvorrichtung nimmt.

### Aufgabe der Erfindung

Der vorliegenden Erfindung liegt die Aufgabe zugrunde, ein kostengünstig darstellbares, bauraumoptimiert gestaltetes Plattenventil zu realisieren.

### Zusammenfassung der Erfindung

Die zuvor genannte Aufgabenstellung wird erfindungsgemäß durch ein hydraulisches Spannsystem mit den Merkmalen des Anspruchs 1 gelöst.

Das erfindungsgemäße Einwegventil wird damit in einem von dem Halteelement definierten Einbauraum gehalten und durch die Druckunterschiede zwischen einer Versorgungsleitung und dem Druckraum des Spannsystems betätigt. Diese Anordnung bietet eine verbesserte Funktionalität, da der als Scheibe gestaltete Ventilkörper unbeeinflusst von weiteren Bauteilen zwischen einer geöffneten und einer geschlossenen Stellung bewegbar ist. Vorteilhaft ist durch die Erfindung das Einwegventil nicht den Öffnungsdruck beeinflussenden Massenkräften ausgesetzt, die beispielsweise das Einwegventil bei einer Anordnung innerhalb eines Kolbens des Spannsystems beaufschlagen. Die Gestaltung des Ventilkörpers als Scheibe bewirkt im Vergleich zu einem als Kugel ausgebildeten Ventilkörper außerdem eine bevorzugte reduzierte Masse. Zusätzlich kann mit einem als Scheibe gestalteten Ventilkörper eine gewünschte größere Druckangriffsfläche realisiert werden, was sich vorteilhaft auf die Funktionalität des Einwegventils und damit des hydraulischen Spannsystems auswirkt.

Vorteilhafte Ausgestaltungen der Erfindung sind Gegenstand der abhängigen Ansprüche 2 bis 9.

Gemäß einer bevorzugten Ausgestaltung der Erfindung ist das Halteelement als ein zylindrisch gestalteter Käfig ausgebildet, der einen konisch geformten Boden mit einer zentrischen Öffnung einschließt. Die Randzone dieser Öffnung bildet innerhalb des Käfigs einen Ventilsitz, an dem der als Scheibe gestaltete, von dem Hydraulikfluidstrom beaufschlagte Ventilkörper in der Dichtfunktion des Einwegventils abgestützt ist.

Sowohl das als Käfig ausgebildete Halteelement als auch der als Scheibe gestaltete Ventilkörper sind kostengünstig spanlos durch ein Stanzen und / oder einem Tiefziehverfahren auch in großen Stückzahlen herstellbar.

Die Gestaltung des erfindungsgemäßen Käfigs sieht vor, dass dieser an der vom Boden abgewandten Seite zumindest drei axial vorstehende Laschen oder einen geschlossenen Bord einschließt. Nach der Montage des als Scheibe ausgebildeten Ventilkörpers werden die Laschen oder der Bord um 90° nach innen gebogen und bilden damit eine wirksame Verliersicherung und Stellwegbegrenzung des Ventilkörpers.

Eine ungehinderte Strömung des Hydraulikfluids durch den Käfig wird erreicht, durch zumindest eine Aussparung am Außenumfang des Ventilkörpers. Bevorzugt schließt der Ventilkörper mehrere symmetrisch umfangsverteilt angeordnete Aussparungen ein, die sich einerseits radial bis über eine Innenkontur von den Laschen erstrecken. Andererseits reichen die Aussparungen nicht bis in die Kontur der zentrischen Öffnung des Käfigs bzw. dessen Randzone.

Zur Schaffung einer geführten bzw. zentrierten Einbaulage des Ventilkörpers innerhalb des Käfigs bildet der Ventilkörper außenseitig symmetrisch verteilt angeordnete Nasen oder Vorsprünge, über die Ventilkörper an der Innenwandung des Käfigs geführt werden kann.

Die Gestaltung des erfindungsgemäßen Plattenventils ermöglicht das dieses bevorzugt in eine zentrische Bohrung des Spannsystems-Gehäuses eingepresst wird. Zur Öffnung des Ventils beaufschlagt das Hydraulikfluid den Ventilkörper durch die zentrische Bohrung im Boden des Käfigs, was sich vorteilhaft auf die Öffnungscharakteristik und damit die Funktion des Spannsystems auswirkt.

Die kompakte Bauform des erfindungsgemäßen, als Plattenventil ausgeführten Einwegsventils unterstreichend, weist dieses eine Bauhöhe von ≤ 5 mm bevorzugt 3 mm auf. Darin eingeschlossen ist ein beweglich als Scheibe positionierter Ventilkörper mit einer Stärke von ≤ 0,7 mm. Unabhängig von den zuvor genannten Maßangaben bietet es sich an bei Bedarf erfindungsgemäß gestaltete Einwegventile mit davon abweichenden Bauhöhen in Verbindung mit Ventilkörpern größerer Bauteilstärke einzusetzen.

Gemäß der Erfindung bietet es sich weiterhin an, in einem aus Metall hergestellten Käfig einen scheibenartig ausgebildeten Ventilkörper aus Kunststoff einzusetzen. Diese Maßnahme bewährt sich insbesondere positiv auf die Geräuschentwicklung des Einwegventils aus. Die Dichtfunktion des Ventilkörpers verbessernd schließt die Erfindung außerdem einen Ventilkörper ein, der zumindest einseitig ventilsitzseitig mit einer Gummierung versehenen oder lokal korrespondierend mit der Fläche des Ventilsitzes beschichtet ist. Alternativ oder ergänzend kann erfindungsgemäß die den Ventilsitz bildende Randzone der zentrischen Öffnung im Boden des Käfigs beschichtet werden, wobei diese Maßnahmen neben einer Verbesserung der Abdichtung gleichzeitig eine nachteilige Geräuschentwicklung des Ventils unterbinden.

### Kurze Beschreibung der Zeichnungen

Die Erfindung wird anhand von Ausführungsbeispielen, unter Bezugnahme auf sechs Zeichnungen näher erläutert. Es zeigen:
- Figur 1: in einer Ansicht das erfindungsgemäße, als Plattenventil ausgebildete Einwegventil;
- Figur 2: die Schnittansicht des Einwegventils gemäß Figur 1 in einem Schnittverlauf 2-2;
- Figur 3: in einer Perspektive das Einwegventil gemäß Figur 1;
- Figur 4: ein als Scheibe gestalteter Ventilkörper als Einzelteil;
- Figur 5: ein gegenüber Figur 4 abweichend ausgeführter Ventilkörper;
- Figur 6: in einer Schnittansicht ein hydraulisches Spannsystem, in das ein erfindungsgemäßes Einwegventil integriert ist.

### Detaillierte Beschreibung der Zeichnungen

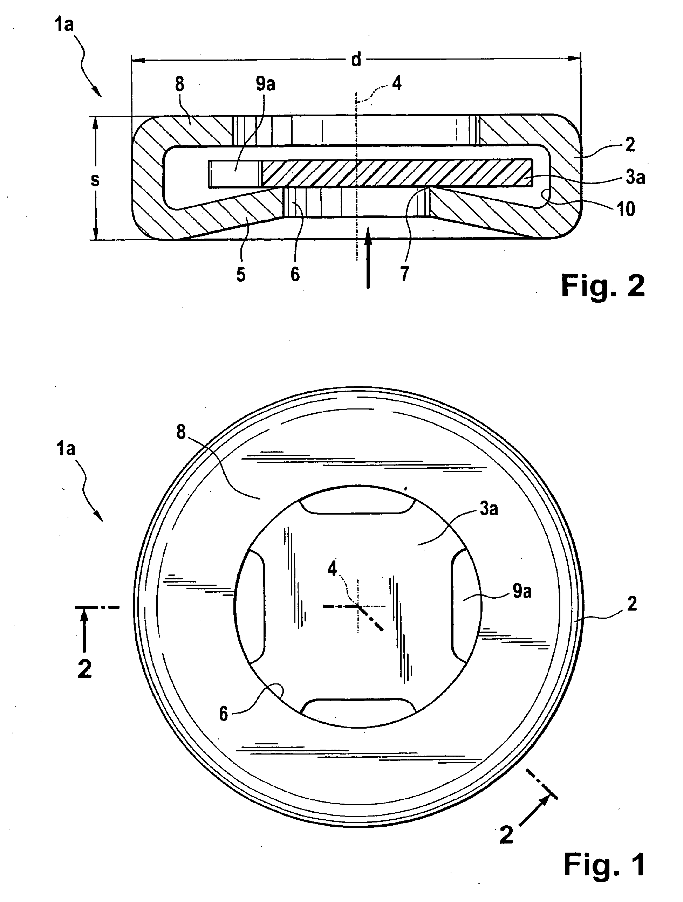

Die Figuren 1 und 2 zeigen ein als Plattenventil ausgeführtes rotationssymmetrisch gestaltetes Einwegventil 1a. Der Aufbau umfasst ein als Käfig 2 ausgebildetes Gehäuse, in dem ein als Scheibe gestalteter Ventilkörper 3a spielbehaftet eingesetzt ist. Der spanlos hergestellte Käfig 2 schließt einen konisch zu einer Längsachse 4 verlaufenden Boden 5 ein. Zentral im Boden 5 ist eine Öffnung 6 eingebracht, an der innenseitig an einer Randzone, welche einen Ventilsitz 7 bildet, der Ventilkörper 3a dichtend abgestützt ist. Beabstandet zu dem Boden 5 weist der Käfig 2 einen rechtwinklig abgekanteten umlaufenden Bord 8 auf, der eine Verliersicherung und gleichzeitig Hubbegrenzung für den Ventilkörper 3a bildet. Die Figur 2 zeigt das Einwegventil 1a in einer geschlossenen Position in der der Ventilkörper 3a dichtend an dem Ventilsitz 7 anliegt. Bei einer Beaufschlagung des Einwegventils 1a mit Hydraulikfluid in Pfeilrichtung wird der Ventilkörper 3a an die Innenseite des Bordes 8 verlagert. Eine ungehinderte Strömung des Hydraulikfluids durch das Einwegventil 1 ermöglichen dabei lokale radiale Aussparungen 9a an dem Ventilkörper 3a, der außenseitig spielbehaftet an einer Innenwandung 10 des Käfigs 2 geführt ist. Wie der Figur 1 zu entnehmen, bilden sich fensterähnlich gestaltete Strömungsquerschnitte im Bereich der Aussparung 9a gegenüber der Innenseite des Bordes 8. Für das Einwegventil 1a ist eine Bauform vorgesehen, die ein Durchmesser / Höhenverhältnis (d / s) von ≤ 4 vorsieht.

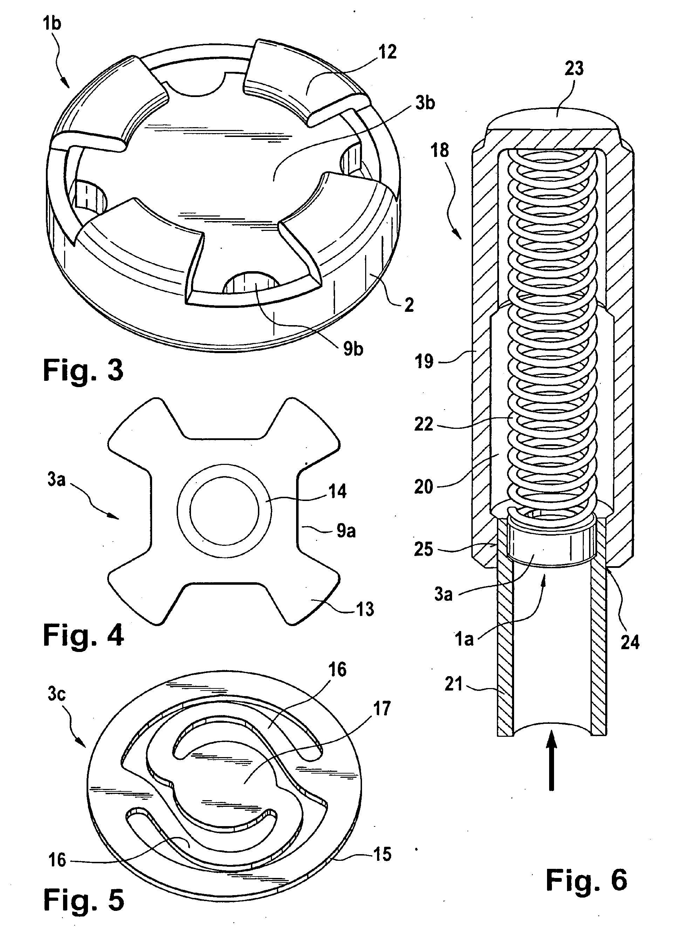

Die Figur 3 zeigt das Einwegventil 1 b in einer Perspektive, das abweichend zu dem Einwegventil 1a vier umfangsverteilt positionierte Laschen 12 einschließt, die anstelle eines geschlossenen Bordes 8 gemäß Einwegventil 1a eine Hubbegrenzung bzw. Verliersicherung für den Ventilkörper 3b bilden. Die Aussparungen 9b sind halbrundartig in die Außenkontur des Ventilkörpers 3b eingebracht.

Die Figuren 4 und 5 zeigen die Ventilkörper 3a, 3c als Einzelteil. Der Ventilkörper 3a weist einen nahezu kreuzförmige Kontur auf, die durch gegenüberliegende Aussparungen 9a gebildet wird. In der Einbaulage ist der Ventilkörper 3a über eine durch Führungsarme 13 gestaltete Außenkontur in dem Käfig 2 geführt. Die Ringkontur 14 des Ventilkörpers 3a bildet eine Kontaktfläche, über die der Ventilkörper 1a an dem Ventilsitz 7 in dem Einwegventil 1a abgestützt ist. Zur Optimierung der Abdichtqualität bietet es sich an, den Ventilkörper 1a im Bereich der Ringkontur 14 lokal zu beschichten, beispielsweise mittels einer Gummierung.

Der Ventilkörper 3c gemäß Figur 5 umfasst ein äußeres Ringelement 15, welches über zwei Verbindungsstege 16 mit einer zentralen Dichtscheibe 17 verbunden ist. Der Ventilkörper 3c eignet sich zum Einbau in einem Käfig, bei dem das äußere Ringelement 15 zwischen einem Boden und einem Bord lagefixiert ist, wobei die zentrale, elastisch angebundene Dichtscheibe 17 mit einer Öffnung des Bodens zusammenwirkt. Die Einbaulage sieht dabei ein ausschließlich lagefixiertes Ringelement 15 vor. Die Verbindungsstege 16 ermöglichen eine hohe Elastizität der zentralen Dichtscheibe 17, wodurch bei einer Anströmung des Einwegventils durch die zentrale Bodenöffnung des Kafigs die Ventilscheibe 17 elastisch ausweichen kann und damit eine ungehinderte Strömung des Hydraulikfluids durch das Einwegventil ermöglicht.

In Figur 6 ist ein hydraulisches Spannsystem 18 im Längsschnitt dargestellt. Der Aufbau umfasst ein topfartig gestaltetes Gehäuse 19, das einen Druckraum 20 bildet, der von einem längsbeweglich geführten Kolben 21 begrenzt ist. Eine im Druckraum 20 des Gehäuses 19 integrierte Schraubendruckfeder 22 ist zwischen einem Boden 23 des Gehäuses 19 und dem Kolben 21 abgestützt. Synchron zu einer Verschiebung des Kolbens 21 in Pfeilrichtung wird eine entsprechende Teilmenge des im Druckraum 20 eingeschlossenen Hydraulikfluids über einen sich zwischen der Außenkontur des Kolbens 21 und einer Innenwandung 25 des Gehäuses 19 einstellenden Leckspalt 24 abgeführt. Eine umgekehrte Stellbewegung des Kolbens 21 bewirkt ein Einströmen des Hydraulikfluids über das im Boden des Kolbens 21 integrierte Einwegventil 1a in den Druckraum 20.

### Bezugszahlenliste

- 1a: Einwegventil
- 1b: Einwegventil
- 2: Käfig
- 3a: Ventilkörper
- 3b: Ventilkörper
- 3c: Ventilkörper
- 4: Längsachse
- 5: Boden
- 6: Öffnung
- 7: Ventilsitz
- 8: Bord
- 9a: Aussparung
- 9b: Aussparung
- 10: Innenwandung
- 11: Einwegventil
- 12: Lasche
- 13: Führungsarm
- 14: Ringkontur
- 15: Ringelement
- 16: Verbindungssteg
- 17: Dichtscheibe
- 18: Spannsystem
- 19: Gehäuse
- 20: Druckraum
- 21: Kolben
- 22: Schraubendruckfeder
- 23: Boden
- 24: Leckspalt
- 25: Innenwandung

## Patentansprüche

1. Hydraulisches Spannsystem, das über eine Spannschiene mit einem Zugmittel eines Zugmitteltriebs zusammenwirkt und das ein Gehäuse (19) einschließt, in dem ein federkraftbeaufschlagter Kolben (21) geführt ist, der einen mit einem Hydraulikfluid gefüllten Druckraum (20) begrenzt, wobei das Hydraulikfluid über ein Einwegventil (1a, 1 b) in den Druckraum (20) einströmt und über einen sich zwischen dem Gehäuse (19) und dem Kolben (21) einstellenden Leckspalt (24) abgeführt werden kann, wobei als Einwegventil (1a, 1 b) ein Plattenventil vorgesehen ist, das zwei spanlos hergestellte Bauteile umfasst, ein einen Ventilsitz (7) einschließendes Halteelement, in dem ein als Scheibe gestalteter Ventilkörper (3a, 3b, 3c) verliergesichert geführt ist wobei das Halteelement als ein zylindrisch gestalteter Käfig (2) ausgebildet ist, der einen konisch geformten Boden (5) mit einer zentrischen Öffnung (6) einschließt, deren Randzone innerhalb des Käfigs den Ventilsitz (7) bildet und **dadurch gekennzeichnet, dass** der an der vom Boden (5) des Käfigs (2) abgewandten Seite zumindest drei axial vorstehende Laschen (12) oder einen geschlossenen Bord (8) einschließt, die oder der nach der Montage des Ventilkörpers (3a, 3b, 3c) um 90° nach innen gebogen, eine Verliersicherung und Hubbegrenzung des Ventilkörpers (3a, 3b, 3c) bewirken.

2. Spannsystem nach Anspruch 1, dessen Ventilkörper (3a, 3b) an dem Außenumfang zumindest eine Aussparung (9a, 9b) einschließt, die bei geöffnetem Einwegventil (1a, 1 b) eine Strömung des Hydraulikfluids durch den Käfig (2) sicherstellt.

3. Spannsystem nach Anspruch 1, wobei der Ventilkörper (3a, 3b) außenseitig symmetrisch verteilte Führungsarme (13) Nasen oder Vorsprünge bildet, über die der Ventilkörper (3a, 3b) an einer Innenwandung des Käfigs (2) geführt ist.

4. Spannsystem nach Anspruch 1, bei dem das Einwegventil (1a, 1 b) in eine zentrische Bohrung des Kolbens (21) eingepresst ist.

5. Spannsystem nach Anspruch 1, wobei die aus einem Blechwerkstoff bestehenden Bauteile, der Käfig (2) und der Ventilkörper (3a, 3b, 3c) durch ein Tiefziehverfahren oder einem Stanzprozess hergestellt sind.

6. Spannsystem nach Anspruch 1, wobei das Einwegventil (1a, 1b) eine Bauhöhe "s" von ≤ 5 mm auf.

7. Spannsystem nach Anspruch 1, das einen Ventilkörper (3a, 3b, 3c) in einer Stärke von ≤ 0,7 mm einschließt.

8. Spannsystem nach Anspruch 1, das einen aus Kunststoff hergestellten Ventilkörper (3a, 3b, 3c) umfasst.

9. Spannsystem nach Anspruch 1, das zumindest der Ventilkörper (3a) im Bereich einer Ringkontur (14), die mit einer Lageposition des Ventilsitzes (7) im Käfig (2) übereinstimmt, eine Beschichtung oder Gummierung aufweist.

## Claims

1. Hydraulic tensioning system which co-operates via a tension rail with a traction means of a traction drive and which includes a housing (19) in which is guided a spring force-loaded piston (21) which delimits a pressure space (20) filled with a hydraulic fluid, the hydraulic fluid flowing into the pressure space (20) via a one-way valve (1a, 1b) and being dischargeable via a leakage gap (24) occurring between the housing (19) and the piston (21), there being provided as a one-way valve (1a, 1b) a plate valve which comprises two components produced in a non-cutting manner, a holding element which includes a valve seat (7) and in which a valve body (3a, 3b, 3c) configured as a disc is guided captively, the holding element being designed as a cylindrically configured cage (2) which includes a conically shaped bottom (5) with a centric orifice (6), of which the marginal zone forms within the cage the valve seat (7), **characterized in that** the valve body (3a, 3b, 3c) includes, on the side facing away from the bottom (5) of the cage (2), at least three axially projecting tabs (12) or a closed rim (8) which, bent inwards through 90° after the mounting of the valve body (3a, 3b, 3c), bring about a captive retention and stroke limitation of the valve body (3a, 3b, 3c).

2. Tensioning system according to Claim 1, of which the valve body (3a, 3b) includes, on the outer circumference, at least one clearance (9a, 9b) which, with the one-way valve (1a, 1b) open, ensures a flow of the hydraulic fluid through the cage (2).

3. Tensioning system according to Claim 1, the valve body (3a, 3b) forming externally symmetrically distributed guide arms (13), noses or projections, via which the valve body (3a, 3b) is guided on a inner wall of the cage (2).

4. Tensioning system according to Claim 1, in which the one-way valve (1a, 1b) is pressed into a centric bore of the piston (21).

5. Tensioning system according to Claim 1, the components consisting of a sheet-metal material, the cage (2) and the valve body (3a, 3b, 3c) being produced by means of a deep-drawing method or a stamping process.

6. Tensioning system according to Claim 1, the one-way valve (1a, 1b) having an overall height "s" of ≤ 5 mm.

7. Tensioning system according to Claim 1, which includes a valve body (3a, 3b, 3c) in a thickness of ≤ 0.7 mm.

8. Tensioning system according to Claim 1, which comprises a valve body (3a, 3b, 3c) produced from plastic.

9. Tensioning system according to Claim 1, at least the valve body (3a) having a coating or rubberizing in the region of an annular contour (14) which coincides with a lying position of the valve seat (7) in the cage (2).

## Revendications

1. Système de tension hydraulique qui coopère par le biais d'un rail de tension avec un moyen de traction d'un entraînement à moyen de traction et qui renferme un boîtier (19), dans lequel est guidé un piston (21) sollicité par la force d'un ressort, qui limite un espace de pression (20) rempli d'un fluide hydraulique, le fluide hydraulique affluant par le biais d'une soupape unidirectionnelle (1a, 1b) dans l'espace de pression (20) et pouvant être évacué par le biais d'une fente de fuite (24) se formant entre le boîtier (19) et le piston (21), une soupape à plaque étant prévue en tant que soupape unidirectionnelle (1a, 1b), laquelle comprend deux composants fabriqués sans enlèvement de copeaux, un élément de retenue incluant un siège de soupape (7), dans lequel est guidé de manière imperdable un corps de soupape (3a, 3b, 3c) en forme de disque, l'élément de retenue étant réalisé sous forme de cage (2) de forme cylindrique, qui inclut un fond (5) de forme conique avec une ouverture (6) centrale, dont la zone de bord forme à l'intérieur de la cage le siège de soupape (7), et **caractérisé en ce que** l'élément de retenue inclut sur le côté opposé au fond (5) de la cage (2) au moins trois pattes (12) saillant axialement ou un bord fermé (8), qui assurent après le montage du corps de soupape (3a, 3b, 3c), tourné de 90° vers l'intérieur, une protection imperdable et une limitation de course du corps de soupape (3a, 3b, 3c).

2. Système de tension selon la revendication 1, dont le corps de soupape (3a, 3b) inclut sur la périphérie extérieure au moins un évidement (9a, 9b), qui assure un écoulement du fluide hydraulique à travers la cage (2) lorsque la soupape unidirectionnelle (1a, 1b) est ouverte.

3. Système de tension selon la revendication 1, dans lequel le corps de soupape (3a, 3b) forme des bras de guidage (13), des nez ou des saillies répartis symétriquement du côté extérieur, par le biais desquels le corps de soupape (3a, 3b) est guidé sur une paroi interne de la cage (2).

4. Système de tension selon la revendication 1, dans lequel la soupape unidirectionnelle (1a, 1b) est enfoncée dans un alésage central du piston (21).

5. Système de tension selon la revendication 1, dans lequel les composants constitués d'un matériau en tôle, la cage (2) et le corps de soupape (3a, 3b, 3c), sont fabriqués par un procédé d'emboutissage profond ou un procédé d'estampage.

6. Système de tension selon la revendication 1, dans lequel la soupape unidirectionnelle (1a, 1b) présente une hauteur de construction "s" ≤ 5 mm.

7. Système de tension selon la revendication 1, qui inclut un corps de soupape (3a, 3b, 3c) ayant une épaisseur ≤ 0,7 mm.

8. Système de tension selon la revendication 1, qui comprend un corps de soupape (3a, 3b, 3c) fabriqué en plastique.

9. Système de tension selon la revendication 1, **caractérisé en ce qu'**au moins le corps de soupape (3a) présente dans la région d'un contour annulaire (14), qui coïncide avec une position de support du siège de soupape (7) dans la cage (2), un revêtement ou une couche caoutchoutée.
